# EUROPÄISCHE PATENTSCHRIFT

(11) **EP 3 225 761 B1**
(45) Veröffentlichungstag und Bekanntmachung des Hinweises auf die Patenterteilung: **21.08.2019**
(21) Anmeldenummer: 17164219.2
(22) Anmeldetag: 31.03.2017
(51) Int. Cl.: E04B 9/18, F21S 8/06, F21V 21/008, F21V 21/112

(54) **AUFHÄNGE-SYSTEM UND ELEMENTE**
SUSPENSION SYSTEM AND ELEMENTS
SYSTÈME ET ÉLÉMENTS DE SUSPENSION

(30) Priorität: 01.04.2016 DE 202016101743 U
(43) Veröffentlichungstag der Anmeldung: 04.10.2017
(73) Patentinhaber: K + B lighting systems GmbH, 76887 Bad Bergzabern (DE)
(72) Erfinder: Keller, Klaus, 72525 Münsingen (DE)
(74) Vertreter: Zimmermann & Partner Patentanwälte mbB

(56) Entgegenhaltungen:
- DE-U1-202006 003 262
- US-A- 4 230 297

## Beschreibung

### Technisches Gebiet

Die vorliegende Offenbarung betrifft ein System und dazugehörige Elemente zur Aufhängung oder Befestigung von Gegenständen. Insbesondere betrifft sie Systeme und Elemente zur Aufhängung von Beleuchtungseinrichtungen an Decken oder Wänden.

### Hintergrund der Erfindung

Es ist eine Vielzahl von Systemen zur dauerhaften Befestigung von Gegenständen an Gebäudedecken oder Wänden bekannt. Bekannt sind z.B. Haken bzw. Ösen, die an dem Gegenstand angebracht sind und mit dem jeweiligen Gegenstück eingreifen, das etwa an einer Raumdecke befestigt ist. Soll eine stabile dauerhafte Befestigung erzielt werden, ist oft der Haken oder die Öse am aufzuhängenden Gegenstand fest angebracht, was eine genaue Positionierung des Gegenstücks an der Wand erfordert, also dessen genaue Montage. Bekannte Systeme schränken meist die Variabilität der Aufhängung ein, das heißt, beim Austausch des Gegenstands, etwa einer länglichen Leuchte wie einer Leuchtstoffröhre, gegen einen längeren desselben Typs müssen die Befestigungselemente an der Decke weitgehend neu angebracht werden. Dies ist etwa bei der Beleuchtung von Industriehallen unvorteilhaft, da gegebenenfalls ein hoher Arbeitsaufwand und damit Kosten erzeugt werden. Standesgemäße Aufhängesysteme sind bekannt aus DE 20 2006 003262 U1 und US 4 230 297 A.

Vor diesem Hintergrund besteht ein Bedarf nach der vorliegenden Erfindung.

### Zusammenfassung der Erfindung

Die Aufgabe der Erfindung wird gelöst durch ein Beleuchtungselement mit Aufhängesystem gemäß Anspruch 1 und der Verwendung eines Aufhängesystems gemäß Anspruch 7.

In einem ersten Aspekt der Erfindung wird ein Beleuchtungselement mit Aufhängesystem vorgeschlagen. Es umfasst zwei im Wesentlichen identische Winkelelemente, die jeweils ein rechtwinklig gebogenes Blech umfassen, das eine Biegekante aufweist, die das Winkelelement in zwei Segmente unterteilt, und wobei jeweils ein Segment der Winkelelemente mit einem Loch versehen ist und die Biegekante auf einem Teil ihrer Länge mit einem sich von einem Ende der Biegekante aus erstreckenden Schlitz versehen ist, und wobei sich die Winkelelemente mittels der Schlitze so um 180 Grad gegeneinander verdreht ineinander schieben lassen, dass die beiden Löcher zur Deckung kommen und zusammen eine durchgehende Öffnung ergeben, und die jeweils anderen, lochlosen Segmente der Winkelelemente zusammen eine Grundfläche ergeben, die ausgelegt ist, mit ihren zwei gegenüberliegenden Kanten in gegenstückig ausgeführte Aufnahmen, vorzugsweise Nuten, in einer aufzuhängenden Vorrichtung einzugreifen.

In einem weiteren Aspekt wird die Verwendung eines Beleuchtungselements mit Aufhängung vorgeschlagen. Es umfasst ein Beleuchtungselement, das an einer Oberseite zwei längliche, parallel verlaufende Nuten aufweist, deren Öffnungen zueinander gerichtet sind, ein Aufhängesystem gemäß dem ersten Aspekt, das mit seinen zwei gegenüberliegenden Kanten in die Nuten eingreift, und ein Befestigungsmittel zur Befestigung an einer Wand, das an einem Ende zum Eingreifen in die durchgehende Öffnung des Aufhängesystems ausgelegt ist.

Weitere Merkmale und Vorteile der vorliegenden Erfindung werden in der folgenden ausführlichen Beschreibung von bevorzugten Ausführungsformen des Systems vorgestellt.

### Kurze Beschreibung der Figuren

Weitere Merkmale und Vorteile der vorliegenden Erfindung werden für den Fachmann anhand der ausführlichen Beschreibung in Verbindung mit den angehängten Figuren ersichtlich. Dabei zeigen:
Fig. 1 zeigt eine Draufsicht auf ein Aufhängesystem gemäß Ausführungsformen während seiner Montage;
Fig. 2 zeigt eine Seitenansicht eines Winkelelements gemäß Ausführungsformen;
Fig. 3 zeigt eine Draufsicht des Elements der Fig. 2;
Fig. 4 zeigt eine perspektivische Ansicht eines Aufhängesystems gemäß Ausführungsformen, ähnlich der Fig. 1;
Fig. 5 zeigt ein Aufhängesystem gemäß Ausführungsformen;
Fig. 6 zeigt zwei Aufhängesysteme gemäß der Fig. 5, die an einem länglichen Decken-Beleuchtungskörper angebracht sind;
Fig. 7 zeigt eine Variante des Winkelelements der Fig. 2 gemäß weiteren Ausführungsformen.

### Detaillierte Beschreibung

Auch wenn bevorzugte Ausführungsformen beschrieben werden, ist der Schutzbereich der Erfindung nicht auf dargestellten Ausführungsformen beschränkt, sondern umfasst auch für den Fachmann naheliegende Ausführungsformen.

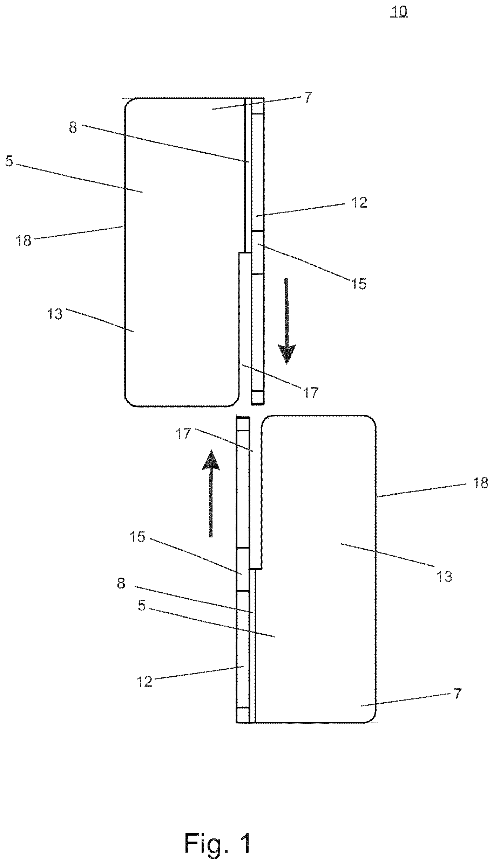

Fig. 1 zeigt ein Aufhängesystem 10 gemäß Ausführungsformen der Erfindung. Es umfasst zwei, im Wesentlichen identische, Winkelelemente 5. Diese umfassen jeweils ein rechtwinklig gebogenes Blech 7, das eine Biegekante 8 aufweist. Diese unterteilt die Winkelelemente 5 jeweils in zwei Segmente 12, 13, die im rechten Winkel zueinander stehen. Dabei ist jeweils ein Segment 12 des Winkelelements 5 mit einem Loch 15 versehen. Die Biegekante 8 ist auf einem Teil ihrer Länge mit einem sich von einem Ende der Biegekante aus erstreckenden Schlitz 17 versehen.

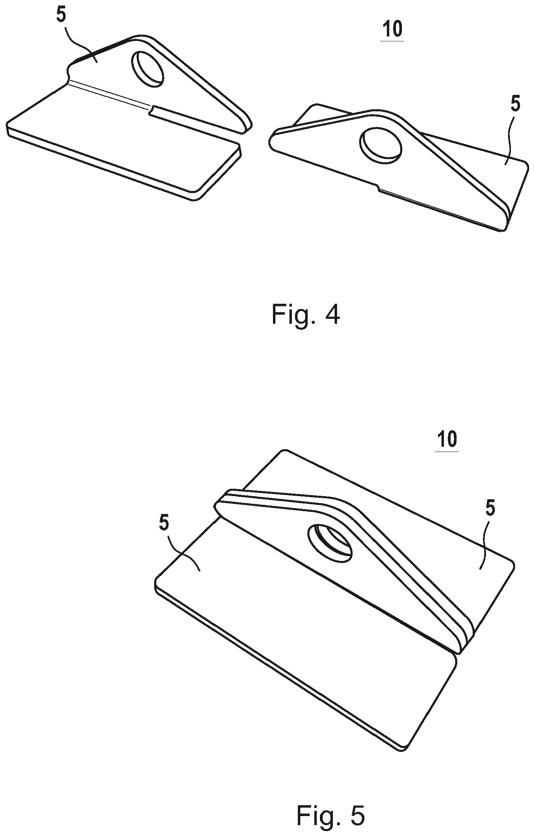

Die beiden Winkelelemente 5 lassen sich mittels der Schlitze 17 so um 180 Grad gegeneinander verdreht so ineinander schieben lassen (siehe Fig. 1), dass die beiden Löcher 15 zur Deckung kommen und zusammen eine durchgehende Öffnung ergeben (siehe etwa Fig. 5). Die jeweils anderen, lochlosen Segmente 13 der Winkelelemente 5 ergeben dann zusammen eine Grundfläche. Diese kann mit ihren zwei gegenüberliegenden Kanten 18 in gegenstückig ausgeführte Aufnahmen, die vorzugsweise als Nuten ausgelegt sind, in eine aufzuhängende Vorrichtung eingreifen, wie etwa eine Deckenleuchte. Da die beiden Segmente 12 mit den Löchern dicht aneinanderliegen und die Bewegung der Winkelelemente 5 voneinander weg im montierten Zustand durch die Nuten 55 blockiert ist, ergibt sich eine stabiler Kraftschluss von den Nuten bis zu einem z.B. Wand-Haken, der durch die durchgehende Öffnung geführt ist.

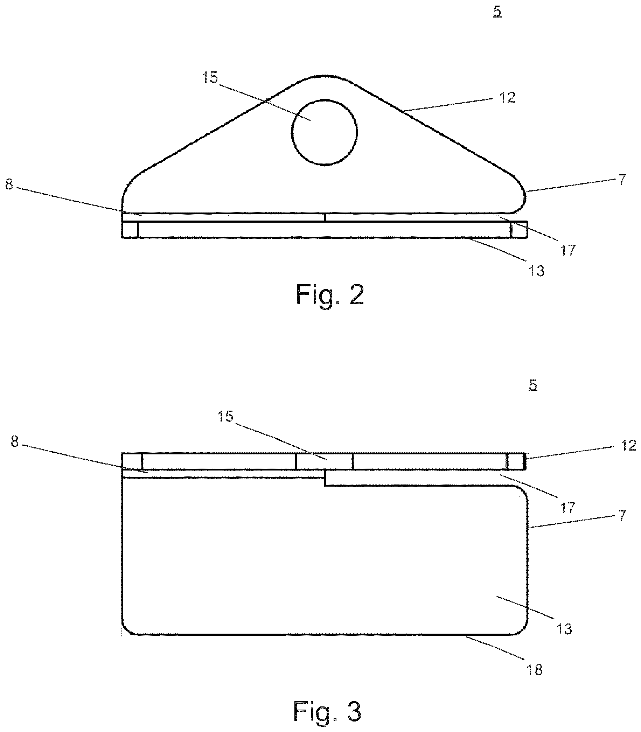

Fig. 2 zeigt eines der oben beschriebenen Winkelelemente 5 für ein Aufhängesystem 10. Es umfasst das rechtwinklig entlang der Biegekante 8 gebogene Blech 7, die das Blech in zwei Segmente 12, 13 unterteilt. Das Blech 7 weist im Bereich der Biegekante 8 einen von ihrem Ende entlang der Biegekante verlaufenden Schlitz 17 auf. Eines der Segmente 12 ist mit einem Loch 15 versehen. Dieses wirkt mit dem Loch des anderen Winkelelements zusammen, wie bei Fig. 1 beschrieben und in Fig. 5 dargestellt. In einer Abwicklung auf eine ebene Fläche weist das Winkelelement 5 im Wesentlichen zwei zusammengesetzte Grundformen auf, ein Rechteck bzw. Quadrat sowie ein daran angesetztes Dreieck. Das Loch 15 ist dabei im Bereich des Dreiecks vorgesehen. Der Schlitz 17 verläuft typischerweise mindestens über die Hälfte der Länge der Biegekante 8 oder darüber hinaus.

Fig. 3 zeigt eine andere Ansicht des Winkelelements 5 der Fig. 2, wobei in der Draufsicht der Verlauf des Schlitzes 17 sichtbar ist.

Fig. 4 zeigt eine perspektivische Darstellung des Aufhängesystems 10 der Fig. 1, gemäß Ausführungsformen. Die beiden Winkelelemente 5 können von der dargestellten Position aus zusammengeschoben werden. Der dadurch erreichte Endzustand des Aufhängesystems 10 ist in Fig. 5 dargestellt, wobei erkennbar ist, dass die beiden Löcher der Winkelelemente 5 die durchgehende Öffnung ergeben.

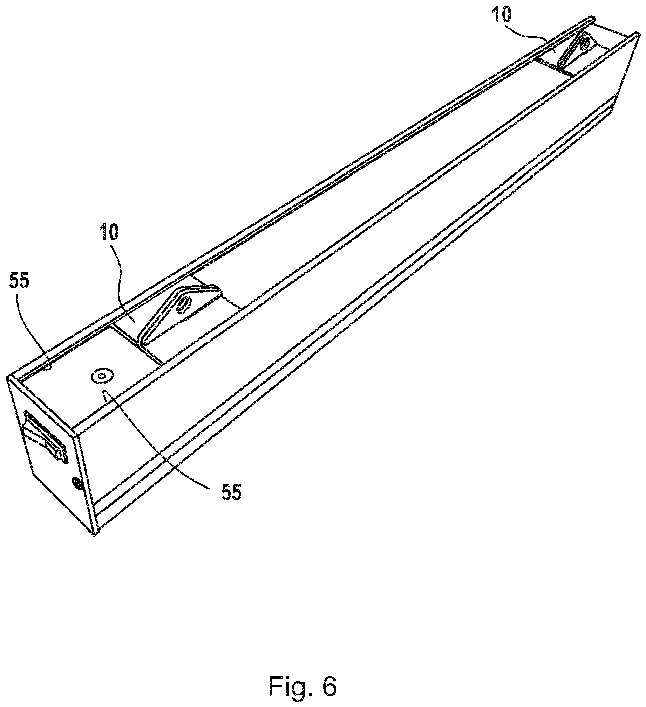

Fig. 6 zeigt ein Beleuchtungselement 50 mit zwei Aufhängesystemen 10 gemäß Ausführungsformen. Das Beleuchtungselement 50 ist im Beispiel eine Deckenleuchte. Sie hat an ihrer Oberseite zwei längliche, parallel verlaufende Nuten 55, deren Öffnungen zueinander gerichtet sind. Die gegenüberliegenden Kanten 18 des Aufhängesystems (vgl. Fig. 1) greifen in die Nuten 55 ein. Ein Befestigungsmittel (nicht gezeigt) dient zur Befestigung an einer Wand. Dies kann etwa ein Haken sein, der mit einem Ende in die durchgehende Öffnung des Aufhängesystems 10 greift und etwa in eine Gebäudedecke eingedübelt ist. Durch Verschieben der beiden Winkelelemente 5 gegeneinander, bzw. in Längsrichtung voneinander weg, lässt sich das Aufhängesystem 10 einfach wieder von dem Beleuchtungselement 50 lösen.

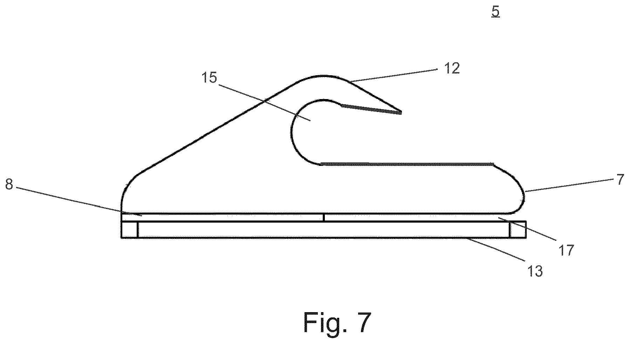

In Fig. 7 ist eine abgewandelte Ausführungsform auf Basis des Winkelelements der Fig. 2 dargestellt. Der Unterschied zur Fig. 2 besteht darin, dass das Loch 15 als Langloch ausgeführt ist. Dieses verläuft von der Mitte des Elements zur Seite hin und ist zur Seite des - hier exemplarisch - dreieckigen Teils hin geöffnet, und verläuft im Wesentlichen parallel zur Biegekante 8. Wenn zwei dieser Winkelelemente 5, ebenso wie in Fig. 1 oder in Fig. 4 dargestellt, gegenläufig ineinandergeschoben werden, ergibt die Kombination der beiden Langlöcher 15 zusammen wieder eine kreisförmige Öffnung, ebenso wie etwa in Fig. 5 dargestellt. Mit dieser Variante kann die Aufhängung z.B. ohne Bewegung der aufgehängten Last - allerdings unter Anwendung einer diese unterstützenden bzw. die Aufhängung entlastenden Haltekraft - gelöst werden, indem die beiden Winkelelemente 5 auseinander bewegt bzw. voneinander weg bewegt werden. Zudem lässt sich die Aufhängung auch sehr einfach an geschlossenen Decken-Halteelementen anbringen, z.B. an Ösen, oder an einem in Richtung der Normalen der kreisförmigen Öffnung verlaufenden (Stahl-)Seil. Im Vergleich zur Ausführung wie in Fig. 2 ist die maximal zulässige Kraft bei der Variante der Fig. 7 geringer, weil die vom Deckenhaken o.Ä. eingeleitete Kraft, im Vergleich zur etwa in Fig. 2 gezeigten Ausführungsform, nur noch über eine Seite übertragen wird. Demgemäß kann die Materialstärke des Winkelelements ggf. entsprechend angepasst/erhöht werden. Entsprechende Berechnungen zur (dauerhaften) Stabilität der Winkelelemente 5, auch unter wiederholten Lastwechseln, kann der Fachmann ggf. gemäß seinem Fachwissen über numerische Methoden wie FEM durchführen.

In Ausführungsbeispielen wird ein Beleuchtungselement mit Aufhängesystem bzw. die Elemente dafür sowie ein entsprechend ausgestattetes Beleuchtungselement bereitgestellt, die eine hohe Stabilität und Haltekraft mit sehr einfacher Handhabung und hoher Flexibilität verbinden.

## Patentansprüche

1. Beleuchtungselement mit Aufhängesystem, umfassend:
- ein aufzuhängendes Beleuchtungselement, umfassend zwei Aufnahmen in Form von an einer Oberseite parallel verlaufenden Nuten (55), deren Öffnungen zueinander gerichtet sind, und die ausgelegt sind zum Eingreifen eines Aufhängesystems (10);
- mindestens ein Aufhängesystem (10), umfassend zwei im Wesentlichen identische Winkelelemente (5), die jeweils ein rechtwinklig gebogenes Blech (7) umfassen, das eine Biegekante (8) aufweist, die das Winkelelement in zwei Segmente (12, 13) unterteilt,
wobei jeweils ein Segment (12) der Winkelelemente mit einem Loch (15) versehen ist und die Biegekante auf einem Teil ihrer Länge mit einem sich von einem Ende der Biegekante (8) aus erstreckenden Schlitz (17) versehen ist,
und wobei sich die Winkelelemente (5) mittels der Schlitze (17) so um 180 Grad gegeneinander verdreht ineinander schieben lassen, dass die beiden Löcher (15) zur Deckung kommen und zusammen eine durchgehende Öffnung ergeben, und die jeweils anderen, lochlosen Segmente (13) der Winkelelemente (5) zusammen eine Grundfläche ergeben, die ausgelegt ist, mit gegenüberliegenden Kanten (18) in die Nuten (55) des aufzuhängenden Beleuchtungselements einzugreifen.

2. Beleuchtungselement mit Aufhängesystem nach Anspruch 1, wobei das Blech (7) in einer Abwicklung auf eine Fläche zwei zusammengesetzte Grundformen umfasst, die ein Rechteck oder Quadrat und ein daran angesetztes Dreieck sind, und wobei das Loch (15) im Bereich des Dreiecks bereitgestellt ist.

3. Beleuchtungselement mit Aufhängesystem nach Anspruch 1 oder 2, wobei der Schlitz (17) mindestens über die Hälfte der Länge der Biegekante (8) verläuft.

4. Beleuchtungselement mit Aufhängesystem nach einem der vorhergehenden Ansprüche, wobei das Loch (15) als Langloch ausgeführt ist.

5. Beleuchtungselement mit Aufhängesystem nach Anspruch 4, wobei sich das Langloch von der Mitte des Winkelelements (5) zu einer der Seiten hin erstreckt und an dieser Seite eine Öffnung darstellt.

6. Beleuchtungselement mit Aufhängesystem nach einem der vorhergehenden Ansprüche, weiter umfassend:
- ein Befestigungsmittel zur Befestigung an einer Wand oder Decke, das an einem Ende zum Eingreifen in die durchgehende Öffnung des Aufhängesystems (10) ausgelegt ist.

7. Verwendung eines Aufhängesystems (10) zum Anbringen eines aufzuhängenden Beleuchtungselements, beides gemäß einem der Ansprüche 1 bis 7, an einem Befestigungsmittel an einer Wand oder einer Decke.

## Claims

1. A lighting element with suspension system, comprising:
- a lighting element to be suspended, comprising two receptacles in the form of grooves (55) which extend in parallel at a top side and the openings of which are directed towards each other and which are designed to engage a suspension system (10);
- at least one suspension system (10) comprising two substantially identical angle elements (5), each comprising a sheet (7) which is bent at a right angle and has a bending edge (8) dividing the angle element into two segments (12, 13),
wherein one segment (12) each of the angle elements is provided with a hole (15) and the bending edge is provided on a part of its length with a slot (17) extending from one end of the bending edge (8),
and wherein the angle elements (5) can be pushed into each other by means of the slots (17) so as to rotate 180 degrees in relation to each other in such a way that the two holes (15) coincide and together form a continuous opening, and the respective other hole-free segments (13) of the angle elements (5) together form a base surface which is designed to engage with opposite edges (18) in the grooves (55) of the lighting element to be suspended.

2. The lighting element with suspension system according to claim 1, wherein the sheet (7) in a projection onto a surface comprises two composite basic shapes, which are a rectangle or square and a triangle attached thereto, and wherein the hole (15) is provided in the region of the triangle.

3. The lighting element with suspension system according to claim 1 or 2, wherein the slot (17) extends over at least half the length of the bending edge (8).

4. The lighting element with suspension system according to one of the preceding claims, wherein the hole (15) is configured as a slot hole.

5. The lighting element with suspension system according to claim 4, wherein the slot hole extends from the center of the angle element (5) towards one of the sides and forms an opening at said side.

6. The lighting element with suspension system according to one of the preceding claims, further comprising:
- a mounting means for mounting on a wall or ceiling, which is designed at one end to engage in the continuous opening of the suspension system (10).

7. The use of a suspension system (10) for attaching a lighting element to be suspended, both according to one of claims 1 to 7, to a mounting means on a wall or a ceiling.

## Revendications

1. Élément d'éclairage doté d'un système de suspension, comprenant :
- un élément d'éclairage à suspendre, comprenant deux logements sous la forme de rainures (55) s'étendant parallèlement sur une partie supérieure, dont les ouvertures sont orientées l'une vers l'autre et qui sont conçues de manière à mettre en prise un système de suspension (10) ;
- au moins un système de suspension (10), comprenant deux éléments en équerre (5) sensiblement identiques, qui comportent respectivement une tôle (7) pliée à angle droit, qui présente une arête de pliage (8), laquelle divise l'élément en équerre en deux segments (12, 13),
dans lequel respectivement un segment (12) des éléments en équerre est pourvu d'un trou (15) et l'arête de pliage est pourvue sur une partie de sa longueur d'une fente (17) s'étendant à partir d'une extrémité de l'arête de pliage (8),
et dans lequel les éléments en équerre (5) tournés de 180 degrés l'un par rapport à l'autre peuvent être emboîtés l'un dans l'autre moyennant la fente (17), de sorte que les deux trous (15) se recouvrent et engendrent ensemble une ouverture traversante, et les deux autres segments respectivement sans trou (13) des éléments en équerre (5) engendrent ensemble une surface de base, qui est conçue pour s'engager par ses bords opposés (18) dans les rainures (55) de l'élément d'éclairage à suspendre.

2. Élément d'éclairage doté d'un système de suspension selon la revendication 1, dans lequel la tôle (7) comprend deux formes de base composées dans une projection développée sur une surface, qui sont un rectangle ou un carré et un triangle y étant rattaché, et dans lequel le trou (15) est mis en place dans la zone du triangle.

3. Élément d'éclairage doté d'un système de suspension selon la revendication 1 ou 2, dans lequel la fente (17) s'étend au moins sur la moitié de la longueur de l'arête de pliage (8).

4. Élément d'éclairage doté d'un système de suspension selon l'une des revendications précédentes, dans lequel le trou (15) est exécuté sous la forme d'un trou oblong.

5. Élément d'éclairage doté d'un système de suspension selon la revendication 4, dans lequel le trou oblong s'étend du centre de l'élément en équerre (5) vers l'un des côtés et constitue une ouverture sur ce côté.

6. Élément d'éclairage doté d'un système de suspension selon l'une des revendications précédentes, comprenant en plus :
- un moyen de fixation à attacher à un mur ou à un plafond, qui est configuré à une extrémité pour s'engager dans l'ouverture traversante du système de suspension (10).

7. Utilisation d'un système de suspension (10) pour poser un élément d'éclairage à suspendre, les deux selon l'une des revendications 1 à 7, sur un moyen de fixation à un mur ou à un plafond.
